# EUROPEAN PATENT SPECIFICATION

(11) **EP 3 600 830 B1**
(45) Date of publication and mention of the grant of the patent: **01.12.2021**
(21) Application number: 18715472.9
(22) Date of filing: 27.03.2018
(51) Int. Cl.: B29C 63/02

(54) **DEVICE AND METHOD FOR APPLYING PROTECTIVE FILMS**
VORRICHTUNG UND VERFAHREN ZUM AUFBRINGEN VON SCHUTZFOLIEN
DISPOSITIF ET PROCÉDÉ D'APPLICATION DE FILMS PROTECTEURS

(30) Priority: 27.03.2017 US 201762477352 P
(43) Date of publication of application: 05.02.2020
(73) Proprietor: Schwenke, Christopher, 4840 Vöcklabruck (AT)
(72) Inventor: Schwenke, Christopher, 4840 Vöcklabruck (AT)
(74) Representative: Peterreins Schley
(86) International application number: PCT/EP2018/000122
(87) International publication number: WO 2018/177590

(56) References cited:
- WO-A1-2014/167433
- WO-A1-2015/038883
- US-A1- 2015 013 890

## Description

### FIELD OF THE TECHNOLOGY

The present technology is directed to effective application of protective films on surfaces of various apparatuses.

### BACKGROUND OF THE TECHNOLOGY

Protective films are commonly applied to maintain the condition and appearance of underlying surfaces. Such films are typically configured to provide some form of self-adhesion with the surface that they seek to protect. Some films are configured to be readily removable with little residue. Easy removability is typically desirable were the protective film is configured as a replaceable wear item. Compared to the object they are intended to protect, such films are typically inexpensive and designed to be replaced when their appearance is deteriorated. Such films are particularly common to protect the surface of displays or other exterior surfaces of mobile or personal computer devices, for example cellular phones and tablet computers. Proper alignment and a film application that is free from bubbles and inclusions are particularly important to maintain visibility and homogenous appearance of laminated device displays.

Proper alignment, avoidance of bubble formation and dust particle inclusions can turn the application of protective films into a daunting process. Due to wear and repeat film replacement of mobile and personal computer devices, actual protective film application is usually left to the end user and is often performed in environments where the presence of dust cannot be avoided. As such devices that facilitate proper alignment with speedy and bubble-free film application are desirable. Various solutions have been proposed to address these problems:
For example, International Patent Application Publication No. WO 2014/167433 to Gawlowski describes a method and device for placing a layer of protective foil over the screen of a telephone or other portable device, for example. Gawlowski's device, however, is bulky and only allows sudden deposition of the whole film across its full extension and hence is prone to formation of trapped bubbles.

United States Patent Application Publication No. US 2016/0009024 to Mason, describes an applicator for applying protective films to electronic device displays. The applicator includes a base, a screen protector, and a squeegee. The base includes a pocket for receiving an electronic device. The screen protector is affixed to the base to overlie the electronic device. The screen protector includes three layers including a protective film, cap sheet and back liner. The back liner includes one or two tags which extend beyond the edge of the protective film to allow the user to manually peel the back liner from the protective film. The squeegee is provided for removing the back liner and for simultaneously affixing the protective film to an electronic device. Mason's applicator, however, is bulky, complicated, and difficult to operate.

Chinese Patent No. CN 203345234 to Wang discloses a film pasting device which comprises a base, a roller wheel seat and a stripping roller. The base is provided with a device positioning cavity, a sliding channel, a front positioning groove and a positioning pillar. The roller wheel seat is composed of a roller wheel shell, a stripping-assisting part and a roller. A roller shaft seat, a clamping groove and a sliding rail are arranged on the roller wheel shell. A roller is arranged in the roller shaft seat. The stripping-assisting part is composed of an L-shaped sheet and double positioning arms. The included angle between the L-shaped sheet and the double positioning arms ranges frame 45 degrees to 60 degrees. When the L-shaped sheet is inserted into the clamping groove of a roller wheel device, a plain end line of the lower rim of the L-shaped sheet is 5mm to 8mm away from the bottom plane of the roller wheel seat and positioned above the roller wheel shell. The roller wheel seat is installed on the front of the base and slides on the sliding channel. Like Mason's applicator, Wang's film pasting device is bulky, complicated, and difficult to operate.

European Patent Application Publication No. EP 2730992 to Hsu et al. describes an application apparatus and a screen protector. The application apparatus is a frame-like structure with an internal hollow region for containing the screen protector that is configured to attach an adhesive film to an electronic device by sliding the application apparatus over an outer contour of the electronic device after peeling a release layer from under the adhesive film. The application apparatus of Hsu et al. is unreliable as it seeks to accomplish registration between the film and the electronic device while applying the adhesive film suddenly across the whole extension of the film and is prone to bubble formation.

United States Patent Application Publication No. US 2016/0176101 to Fan describes a positioning device suitable for auxiliary positioning when pasting a screen protecting film to an electronic device with a functional port in its bottom end surface and a button on its front surface adjacent to the functional port. Fan's positioning device is flimsy, provides poor film registration and is prone to bubble formation.

United States Patent Application Publication No. US 2009/0186181 to Mase discloses a multilayer protective film including a split adhesive layer configured to facilitate initial alignment and to provide surface cleaning by sacrificial peeling of the split adhesive layer in preparation for the application of a second adhesive layer intended for actual protection of electronic device screen. Mase's multilayer protective film requires manual film alignment and entails an elaborate application procedure while it relies on the durability of the alignment of the initially applied split adhesive layer until the application of the second adhesive layer is complete. As such it is prone to alignment errors and cumbersome in its application.

Chinese Patent Application Publication No. CN 105314153 to Wu is an example describing a method for applying a protective film using removable adhesive stickers configured as an aid to align the film with an edge of a mobile phone in preparation for the film application. Wu's method only allows for sudden deposition of the whole film on the mobile phone surface and hence is prone to bubble formation.

### SUMMARY OF THE TECHNOLOGY

An object of the present technology is to provide a device for applying protective films. In accordance with one aspect of the present technology, there is provided a device comprising a frame configured to couple removably with an apparatus in an attached configuration; and an adhesive film having a first portion removably coupled with the frame and a second portion spaced apart from the first portion. The adhesive film is configured to adhere to a target surface of the apparatus. In the attached configuration when the adhesive film is taut and the second portion is abutting the target surface of the apparatus, the first portion is being held a distance away from the surface of the apparatus and the second portion registers in a predetermined manner with the target surface of the apparatus.

### BRIEF DESCRIPTION OF THE DRAWINGS

Figure 1 shows a perspective view of an assembly of a mobile phone with an example film-application device according to the present technology.
Figure 2 shows an exploded perspective view of the assembly of Figure 1.
Figure 3 shows a perspective view of the assembly of Figure 1 as seen from below.
Figure 4 shows an exploded view of several example multi-layer pads according to the present technology.
Figure 5 shows a side view of the assembly of Figure 1 on a support surface.
Figure 6 shows a perspective view of another example film-application device according to the present technology.
Figure 7A shows a perspective view of another example film-application device according to the present technology.
Figure 7B shows a perspective view of another example film-application device according to the present technology.
Figure 7C shows a perspective view of the bottom of the example film-application device of Figure 7B.
Figure 7D shows an exploded view of parts of the example film-application device of Figure 7B.
Figure 8 shows a perspective view of another example film-application device according to the present technology.
Figure 9 shows a perspective view of another example film-application device according to the present technology.
Figure 10A shows a perspective view of the assembly of Figure 1 with a lifted pad with a partially peeled bottom film.
Figure 10B shows a perspective view of the assembly of Figure 1 with a taut pad abutting the mobile phone.
Figure 10C shows a perspective view of the assembly of Figure 1 with a partially pasted protective film and a spatula used to aid pasting.
Figure 10D shows a perspective view of the assembly of Figure 1 with a partially peeled top film.
Figure 10E shows a perspective view of the assembly of Figure 1 with a fully peeled top film.
Figure 10F shows a perspective view of the assembly of Figure 10E after separation.

### DETAILED DESCRIPTION OF THE TECHNOLOGY

The present technology provides a device for applying films to displays or other target surfaces of apparatuses such as phones, tablets, laptop and desktop computers, wrist watches, cameras, televisions, measuring instruments or other apparatuses, for example. The device includes a frame and a multi-layer pad including a protective adhesive film. In some implementations, the protective adhesive film is transparent. The pad with the adhesive film is supported and removably coupled with the frame, for example along an edge of the film. The frame is configured to be clamped or otherwise coupled with the apparatus. When fully coupled, the frame and the apparatus can register accurately within a certain tolerance and in turn the film can accurately register with the target surface of the apparatus. When taut, the adhesive film can be laid down beginning distal of the supported edge that is coupled with the frame while the portion of the adhesive film near the supported edge is kept slightly elevated by a predetermined distance above the target surface by the frame to facilitate the application process. After its distal edge has been attached, the adhesive film can then be pasted onto the apparatus using a suitable spatula or other aid. In some implementations, the application of the protective adhesive film can be completed and the apparatus separated from the frame after peeling a sacrificial top film from the protective adhesive film.

The film-application device allows for reliable registration between the adhesive film and the target surface of the apparatus and can mitigate inclusion and bubble formation during film application. The present device and application process can provide pasted adhesive film that is free from visible imperfections.

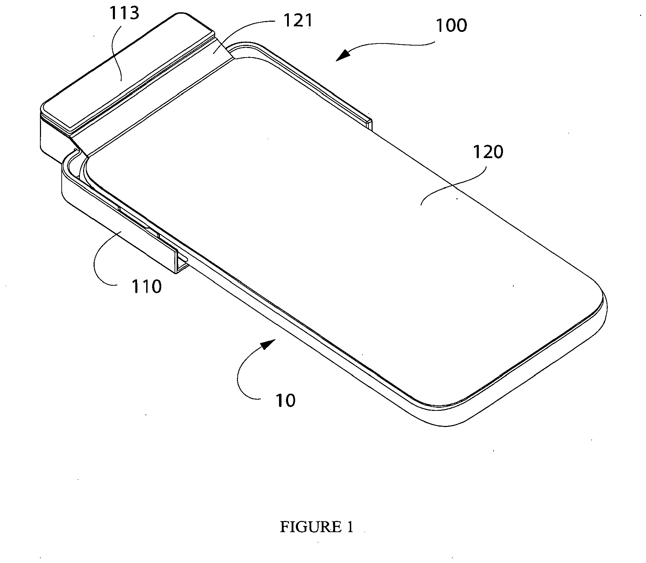

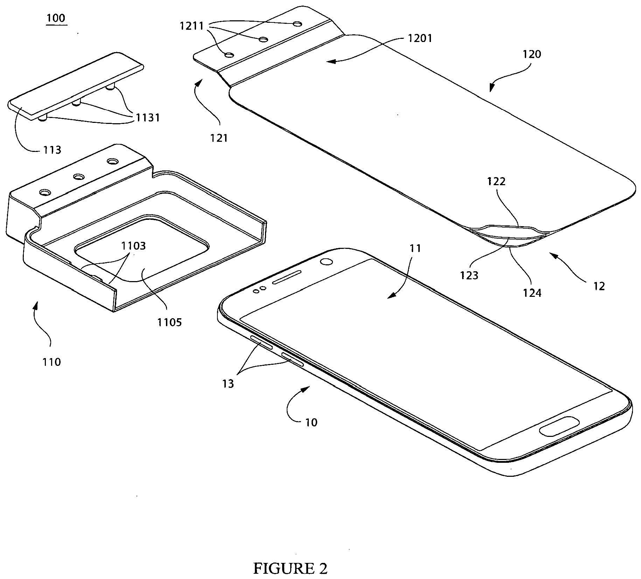

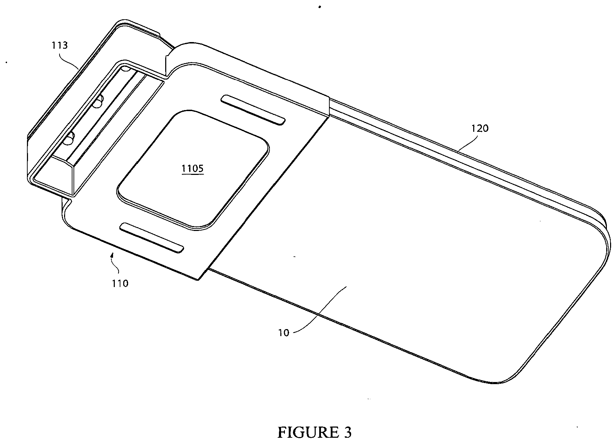

Figure 1 shows a perspective view of an assembly of an example film-application device 100 according to the present technology with an inserted mobile phone 10. Figure 2 shows an exploded perspective view of the assembly of Figure 1. Figure 3 shows a perspective view of the assembly of Figure 1 from below.

The example film-application device 100 is configured for application of a protective film to a target surface **11** provided by a front face of a mobile phone **10.** In this example, the target surface **11** includes the display and other areas of the front face but omits buttons, cameras, speakers and light sources. In some examples, the target surface includes only the display of the mobile phone.

The film-application device **100** includes a frame **110** with a cap **113** and a multi-layer pad **120.** Figure 1 shows the multi-layer pad **120** resting on the mobile phone **10.** In this example, the multi-layer pad **120** includes a tab **121,** a top film **122,** a bottom film **124** and a transparent protective adhesive film **123.** The transparent protective adhesive film **123** is configured to extend across the target surface **11** and includes corresponding apertures (not illustrated) to accommodate various elements on the front face of the mobile phone **10** as noted above. Depending on the implementation, one or more of the three films **122, 123** and **124** may be opaque, translucent, or partially or fully transparent, for example. For example, the top film **122** may be transparent and have a bluish or other color hue that enhances contrast versus the target surface **11.** Good contrast can aid the user in the recognition of features such as edges and apertures of the target surface **11** and the pad **120** during film application and hence facilitate the registration of the transparent protective adhesive film **123** with the target surface **11.**

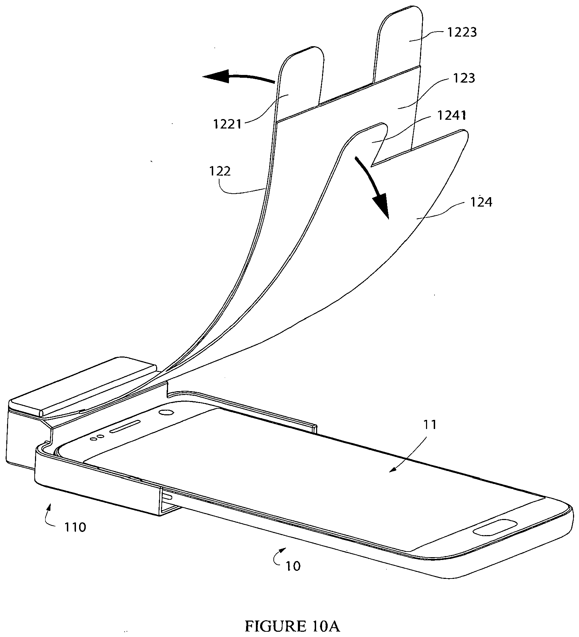

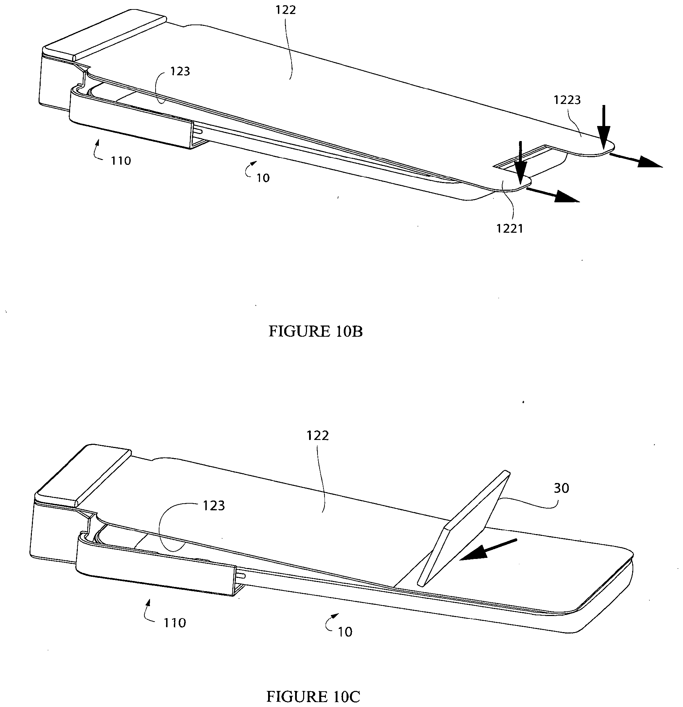

In Figure 1, the multi-layer pad **120** is shown to rest on the mobile phone **10.** Features in or under the multi-layer pad **120** are not illustrated. Figure 2 shows the multiple films **122, 123** and **124** schematically fanned out at a corner **12.** The multi-layer pad **120** further includes protruding tabs **1221, 1223** and **1241** (see Figures 10A and 10B) configured to facilitate separation of the multiple films **122, 123** and **124** by peeling. In this example, the tabs **1221, 1223** and **1241** are formed from separate strips of suitable material adhered to respective films. The separate nature and adhesion of the tabs with the films are not indicated in Figures 10A and 10B. The tabs **1221** and **1223** are adhered to the top of and protrude from the top film **122,** the tab **1241** is adhered to the bottom of and protrudes from the bottom film **124.** The multi-layer pad **120** can be fabricated from a sandwiched web material that includes films **122, 123** and **124** and is die cut to fit the target surface **11.** Tabs **1221, 1223** and **1241** then can be adhered after die cutting. In other examples, tabs may be formed integrally with like or other films of respective multi-layer pads. Generally, one or more of the top, bottom and/or the transparent protective adhesive films may be provided with one or more tabs in various combinations to facilitate separation.

The frame **110** is shaped to clamp resiliently to the mobile phone **10** by grabbing onto a U-shaped portion of the circumference of the mobile phone **10** and includes indentations **1103** and an opening **1105** to accommodate buttons **13,** camera components (not illustrated) or other elements protruding from the mobile phone **10.** The frame **110** is configured so it can hold the taut pad **120** with the transparent protective adhesive film **123** slightly elevated by a certain distance above the target surface **11** near the supported edge **1201.**

In this example, the frame **110** near the supported edge **1201** is slanted in a flat manner. The recess and height of the slant may be configured to control a remaining amount of transparent protective adhesive film **123** that may only be applied at like distances to the target surface **11** after the mobile phone **10** and the frame **110** are separated. Further details about the film application process are described with respect to Figures 10A through 10F. Other example film-application devices may have edges with different or no slants.

Initially, the transparent protective adhesive film **123** is sandwiched between the top film **122** and the bottom film **124.** The top film **122** and the bottom film **124** are configured to protect the transparent protective adhesive film **123** from dust and scratches for example, until it is pasted onto the target surface **11** of the mobile phone **10.** In this example, the tab **121** is formed from a separate strip of suitable material adhered to the top of the top film **124** to form a protrusion of the pad **120** and is configured to engage and reliably register the pad **120** with the frame **110** along the supported edge **1201.** The separate nature and adhesion of the tab **121** with respect to the top film **124** are not indicated in the figures. The tab **121** includes three openings **1211** configured to mate with protrusions **1131** provided by a cap **113.** The frame **110** has like openings **111** configured to mate with the protrusions **1131** of cap **113** so that the multi-layer pad **120** can be coupled accurately to the frame **110.** In other implementations, the tab **121** can be formed as an integral protrusion of the top film, for example.

Depending on the implementation, the pad **120** can be securely coupled to the frame **110** via the cap **113** during manufacture or later by an end user, for example. A respective coupling may be established by welding or a friction fit, for example. Depending on the implementation, respective parts may be removable or irremovable by the end user. Film-application devices with a removable cap can be used to secure suitable pads onto the frame by the end user.

In other example film-application devices the pad may be coupled with the frame in other ways. For example, the bottom film may be split into a portion proximate the supported edge that includes a tab secured to the frame and a distal portion that can be peeled away independently to allow exposing a portion of an adhesive side of a respective protective adhesive film and initial placement and adhesion of same on the target surface distal of the supported edge. In some embodiments, protective adhesive film may be directly coupled to the frame and include a predetermined break line configured to allow separation of the protective adhesive film from the frame.

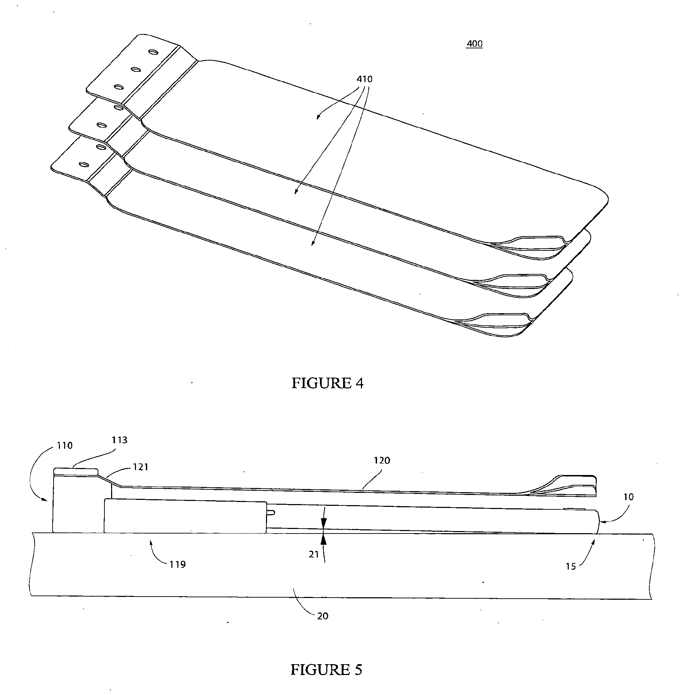

The example film-application device **100** of Figure 1 is shown to include a single multi-layer pad **120** which allows one film application. Other example film-application devices may include several multi-layer pads to allow reuse of the device for multiple film applications. Such example film-application devices may be used to replace worn protective adhesive films previously applied to target surfaces with protective adhesive films from remaining unused multi-layer pads. Figure 4 illustrates an exploded view of an example pad package **400** including three multi-layer pads. Each of the pads **410** is shown schematically fanned out at respective corners. Such pad packages can be configured to include pads with one or more creases to allow easy folding away of unused pads during film application. One or more of the films of each pad further may include one or more protruding tabs (not illustrated) configured to facilitate separation of each pad. Such tabs may be located along one or more edges of respective films, for example distal of the frame. Depending on the implementation, pads and pad packages may be provided to an end user separately or already affixed to a film-application device. In implementations with several multi-layer pads, the pad that is closest to the inserted apparatus is being used during film application while any extra unused pads are folded away.

To provide solid support during film application, the frame 110 of the example film-application device 100 has a base 119 that is tapered at an angle 21 relative to a back surface of a properly attached mobile phone 10 to avoid rocking the assembly on a flat external support 20 such as a tabletop, for example. Figure 5 illustrates an example. The angle **21** can be chosen to form a three-point support between an edge **15** of the mobile phone **10** and the base **119** of the frame 110. In this example, the base **119** has a flat bottom surface and is configured to establish solid contact with the support **20** when the mobile phone **10** is attached.

To further stabilize the assembly and mitigate slippage during film application, the base **119** and/or other portions of the frame **110** may optionally be provided with surfaces configured to increase friction between the frame 110 and the external support 20. Such surfaces may include one or more rubber, silicone or other slip-mitigating elements configured to increase adhesion to and/or friction (not illustrated) with the external support 20. In some implementations, such surfaces may include one or more adhesive strips which can be configured for single or multiple use.

### FURTHER EXAMPLE IMPLEMENTATIONS

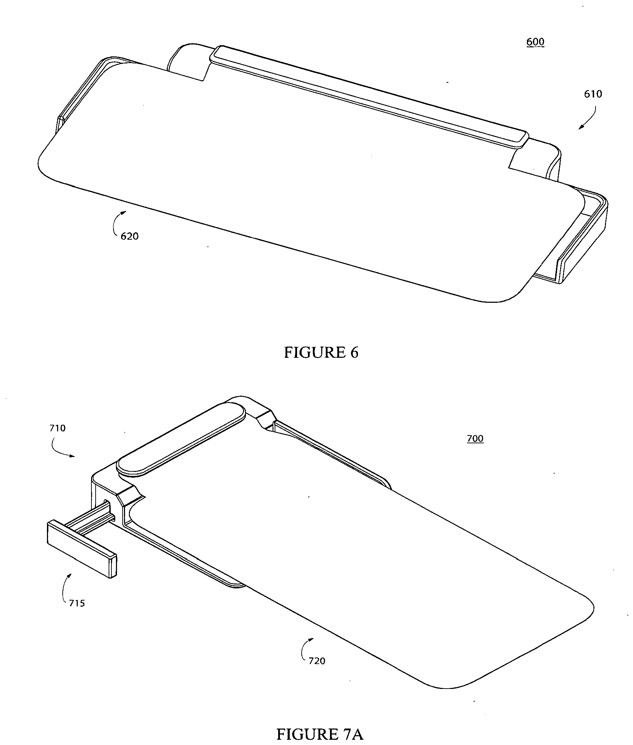

Figures 6, 7A through 7D, 8 and 9 show a selection of further example film-application devices according to the present technology. Figure 6 shows an example film-application device **600** similar to the example film-application device **100** but uses a long edge to both clamp the frame **610** to an apparatus and to support a multi-layer pad **620** with a protective adhesive film.

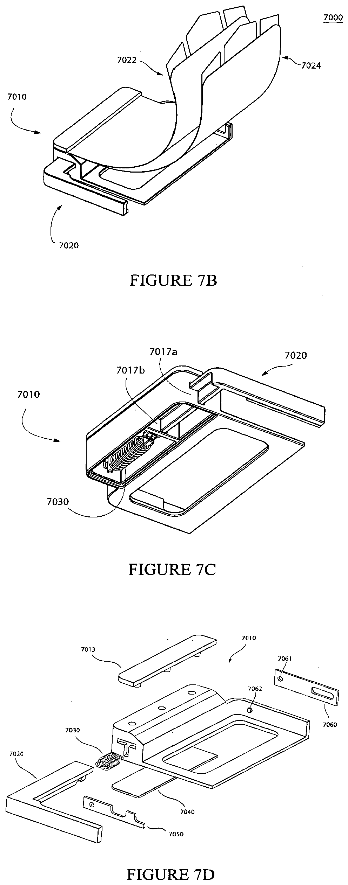

Figure 7A shows another example film-application device **700** with a multi-layer pad **720,** and a frame **710** that includes a retractable resiliently biased arm **715** configured to clamp and register an apparatus with the frame 710. Such biasing mechanisms (not illustrated here) can include a spring-loaded arm ― see example in Figures 7B through 7D, or a friction fit arm engaging a rubber or other suitable frame insert, or a releasable anti-reverse mechanism including a toothed rack configured to engage a releasable ratchet pawl, for example. The retractable arm can be configured to attach to apparatuses of different width.

Figures 7B through 7D show various views of an example film-application device **7000** with a spring **7030,** a spring-loaded arm **7020** and a frame **7010** and two multi-layer pads **7022** and **7024** with respective tabs. The film-application device **7000** is configured to attach apparatuses of different width. Figure 7B shows the two multi-layer pads **7022** and **7024** fanned out. The spring-loaded arm **7020** has a T-shaped profile and the frame **7010** includes two ridges **7017a** and **7017b** with correspondingly shaped openings to guide the spring-loaded arm **7020** when assembled ― see bottom view of the film-application device **7000** in Figure 7C, for example. The frame **7010** is arranged to provide a chamber shaped to accommodate the spring 7030. In the assembled configuration, the spring-loaded arm 7020 is slidably coupled with the frame 7010 via noted openings in the ridges 7017a/b and the spring 7030 such that the spring-loaded arm 7020 can resiliently clamp and register an apparatus (not illustrated) with the frame 7010 in the attached configuration. In this example, the film-application device 7000 includes a bottom plate 7040 configured to close off the bottom of the frame 7010 and enclose the spring 7030.

The film-application device 7000 further includes a pair of inserts 7050 and 7060 best visible in Figure 7D. There can be other numbers of inserts depending on the implementation. The inserts 7050 and 7060 are shaped to fit certain apparatus. For this purpose, an insert can be shaped and/or include through holes, protrusions and/or indentations configured to engage with edges, indentations and/or protrusions of an apparatus, respectively.

Inserts may be supplied to a user or be installed during assembly of the film-application device 7000, for example. As such different inserts can be supplied to fit different types of apparatuses. Correspondingly configured multi-layer pads may be supplied to a user or selected during assembly respectively, as different apparatuses may require different types, sizes or other configurations of protective films.

To hold an insert in place and to properly register the insert and subsequently an attached apparatus with the frame, the insert and the frame can include mating features, for example, features 7061 and 7062. Such features can include protrusions, indentations, through holes or other mating features.

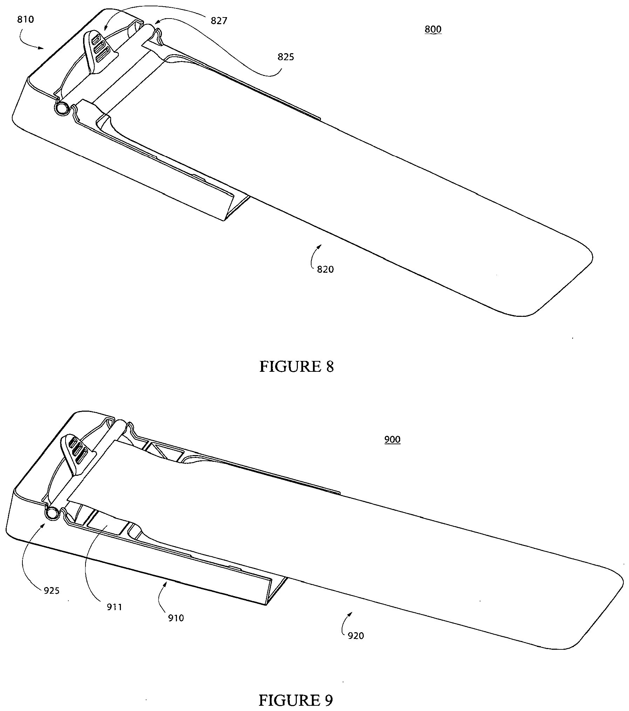

Figure 8 shows another example film-application device 800 with a frame 810 that is configured to couple resiliently with a pad-support pin 825. The coupling is configured to allow pivoting the pad-support pin 825 relative to the frame 810. The pad-support pin 825 is coupled to a multi-layer pad 820 which includes a protective adhesive film. The pad-support pin 825 can be coupled and decoupled repeatedly from the frame 810 facilitated by a handle 827 attached to the pad-support pin 825. Figure 9 shows another example film-application device 900 with a frame 910 that is configured to couple resiliently with a pad-support pin 925 and allow pivoting the pad-support pin 925 relative to the₋frame 910. The example film-application device 900 is similar to the example film-application device 800 but additionally includes a through hole in form of a slit 911 in the frame 910. The slit 911 is shaped and sized to receive a multi-layer pad 920 or portion thereof and thread it through to the bottom side of the frame 910 away from the top intended to face a target surface for film application. The slit 911 can be used to receive and stow away a bottom film that is fixedly attached to the pad-support pin 925 after separation from the multi-layer pad 920.

Depending on the implementation, pad-support pins can be configured to provide one or more multi-layer pads. Pad-support pins may be supplied separately as replacement items and configured to allow multiple film applications using the same frame.

In some implementation, a protective adhesive film is formed from a material that on its own provides sufficient adhesion with the target surface without requiring a separate substance to facilitate adhesion. Depending on the implementation, such adhesive films may be configured to leave no residue on the target surface after removal. In some implementations, a separate adhesive layer may be employed. Such adhesive layers can be configured to leave or not leave residue on the target surface after removal.

Depending on the implementation, film-application devices can comprise different materials such as plastic, metal, compound or other materials, for example. Film-application devices may be formed integrally or from multiple separate components. Separate components can be configured to interlock and allow repeat disassembly and assembly without destruction, or be permanently adhered by gluing, welding, vulcanizing or other means, for example. Integrally formed film-application devices or parts thereof may be injection molded, cast, machined, or otherwise fabricated.

Depending on the implementation, film application devices can be configured to permit reuse, recycling, disposal or other aspects. To limit environmental impacts after intended use, film application devices may be of small size and configured to employ and produce small amounts of waste material.

### FILM APPLICATION

Returning to Figures 1 through 3, the process of film application is being described with respect to example film-application device 100. Figures 10A through 10F show examples of steps during film application in which bold arrows indicate directions of force application. To begin film application, the target surface 11 of the mobile phone 10 can be cleaned (not illustrated) in a suitable manner, for example by using a cloth, a cleaning solution or other method. The mobile phone 10 is attached to the frame 110 to establish a properly registered assembly. This can be done after or before cleaning. The bottom film 124 can then be peeled from the multi-layer pad 120 to access the face of the transparent protective adhesive film 123 that is configured to adhere to the target surface 11 of the mobile phone 10. By pulling tab 1241 away from tab 1221, the bottom film 124 can be lifted off the transparent protective adhesive film 123 and fully peeled away. Figure 10A shows the assembly with a partially removed bottom film 124. After removal, the bottom film 124 can be set aside and/or disposed of. At this point, the portion of the pad 120 that remains coupled with the frame 110 includes the transparent protective adhesive film 123 and top film 122.

The pad 120 can then be taut slightly and the transparent protective adhesive film 123 laid down onto the target surface 11 distal of the supported edge that is coupled with the frame 110. Tabs 1221 and 1223 can be used to conveniently hold and taut the remainder of the pad 120 including the top film 122 and the transparent protective adhesive film 123. Figure 10B shows the assembly at this stage of the film-application process. As noted, the film-application device 100 is configured to allow a portion of the adhesive film extending from the supported edge to remain slightly elevated above the target surface without further manipulation to avoid inadvertent sagging and/or static cling of the adhesive film onto the target surface 11 once the distal edge of the transparent protective adhesive film 123 is properly aligned with and adhered to the target surface 11. During alignment, outer edges, and/or apertures for buttons, speakers, cameras and so forth provided by the pad 120 can be used as registration aids with respective elements provided by the target surface 11. The example film-application device 100 furthermore, can be configured to allow registration and application of the distal edge of the transparent protective adhesive film 123 while maintaining a comfortable range of tension in the pad 120 that is intuitive to the user.

The elevated portion of the transparent protective adhesive film 123 then can be applied to the target surface by pasting the pad 120 with a spatula 30, cloth or other aid towards the supported edge of the transparent protective adhesive film 123. The spatula 30 can be moved in smooth strokes to mitigate formation of bubbles in the transparent protective adhesive film 123. Figure 10C shows the assembly at this stage of the film-application process. Tabs 1221 and 1223 are not shown in Figures 10C through 10F.

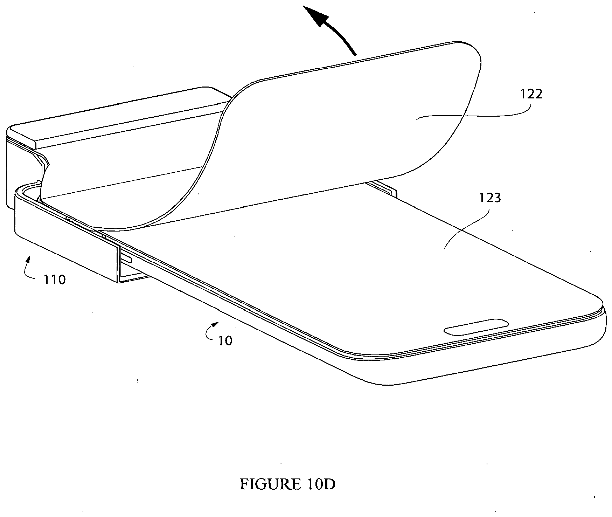

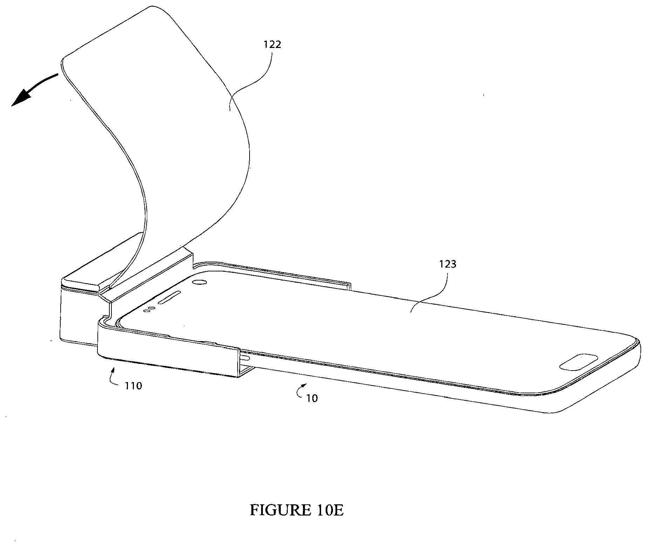

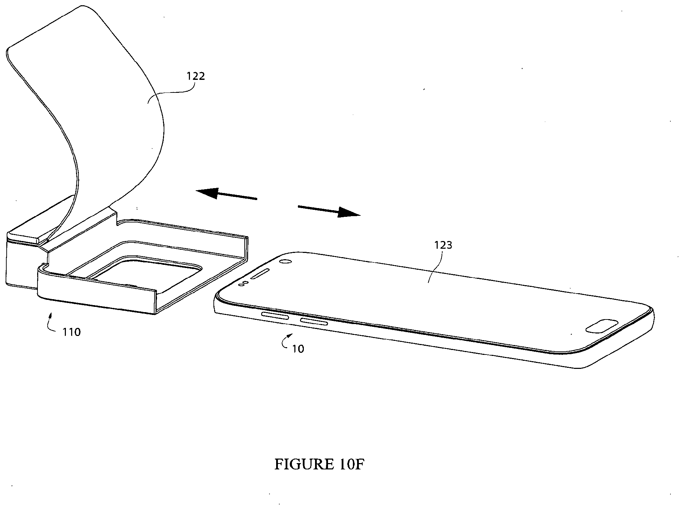

Once sufficient protective adhesive film 123 is pasted onto the target surface 11, the top film 122 can be peeled away and folded back to release the transparent protective adhesive 123 and allow any remaining loose portion of the transparent protective adhesive 123 to be freely and fully pasted onto the target surface 11. Figures 10D and 10E show the assembly during and after removal of the top film 122, respectively. At this stage, the transparent protective adhesive film 123 has been pasted completely onto the target surface 11. The mobile phone 10 can then be removed from the frame 110. Figure 10F shows a perspective view of the assembly after separation with the transparent protective adhesive film 123 applied to the target surface 11 of the mobile phone 10.

It is obvious that the foregoing embodiments of the technology are examples and can be varied in many ways. Such present or future variations are intended to be included within the scope of the following claims.

## Claims

1. A device (100; 600; 700; 7000) comprising:
a. a frame (110; 610; 710; 7010) configured to couple removably with an apparatus (10) in an attached configuration; and
b. an adhesive film (123) having a first portion coupled with the frame and a second portion distal from the first portion, the adhesive film configured to adhere to a target surface (11) of the apparatus, **characterized in that**
in the attached configuration when the adhesive film is taut and the second portion is abutting the target surface of the apparatus, the first portion is being held a distance away from the surface of the apparatus and the second portion registers in a predetermined manner with the target surface of the apparatus.

2. The device of claim 1 further comprising:
a bottom film (124) configured to cover and peel from a side of the adhesive film (123) configured to adhere to the target surface (11).

3. The device of claim 2, wherein the bottom film (124) comprises one or more tabs (1241) that protrude beyond the adhesive film and are configured to facilitate peeling the bottom film from the adhesive film.

4. The device of claim 1 further comprising a top film (122) configured to cover and peel from a side of the adhesive film (123) opposite the side configured to adhere to the target surface (11).

5. The device of claim 4, wherein the top film (122) comprises one or more tabs (1221, 1223) that protrude beyond the adhesive film and are configured to facilitate registration of the adhesive film with the target surface and peeling the top film from the adhesive film, optionally,
wherein the adhesive film comprises one or more removable tabs, optionally
wherein the adhesive film separates from the frame after peeling off the top film, optionally
wherein the adhesive film further includes a predetermined break line configured to allow separation of the adhesive film from the frame.

6. The device of claim 1, wherein the adhesive film extends across predetermined portions of the target surface and includes one or more apertures.

7. The device of claim 1, wherein the frame is configured to extend along a portion of a circumference of the apparatus, optionally
wherein the frame is further configured to establish a friction fit with the apparatus in the attached configuration.

8. The device of claim 1, wherein the frame has one or more protrusions configured to mate removably with corresponding indentations provided by the apparatus and register the frame with the apparatus, optionally
wherein the frame is configured to clamp resiliently to the apparatus, optionally further including a retractable resiliently biased arm arranged to clamp and register the apparatus with the frame in the attached configuration.

9. The device of claim 1, wherein the target surface includes a display provided by the apparatus, optionally
wherein the apparatus is selected from the group consisting of a mobile phone, a tablet, a laptop computer, a desktop computer, a wrist watch, a camera, a television and a measuring instrument.

10. The device of claim 1, wherein the frame comprises a protrusion protruding beyond the target surface and configured to hold the first portion of the adhesive film said distance away from the target surface, optionally
wherein the frame includes one or more indentations (1103) configured to receive one or more protrusions provided by the apparatus.

11. The device of claim 1, wherein when the second portion of the adhesive film is being brought into contact with the target surface, the adhesive film adheres to the surface of the apparatus beginning at the second portion.

12. The device of claim 11, wherein the adhesive film is configured to fully adhere to the surface of the apparatus when the adhesive film is deregistered from the frame.

13. The device of claim 12 further comprising a top film affixed to the frame and configured to register the adhesive film with the frame, the top film removably adhering to a side of the adhesive film that is opposite the side that is configured to adhere to the surface of the apparatus wherein the adhesive film is configured to deregister from the frame when the top film is peeled from the adhesive film.

14. The device of claim 1, wherein the frame is configured to support the apparatus in the attached configuration in an inclined orientation relative to a support surface, optionally
wherein the frame is further configured to hold the apparatus in the inclined orientation without allowing rocking the apparatus on the support surface, optionally
wherein the frame extends along a portion of the apparatus and has a base that is tapered at an angle that supports the apparatus on the support surface in the inclined orientation, optionally
wherein the frame has a base including one or more elements configured to increase friction between the frame and a support surface to mitigate slippage of the device.

15. The device of claims 1 to 5, wherein the top (122), bottom (124) and adhesive (123) film are forming a multi-layer pad (120) optionally
further comprising multiple of said multi-layer pad (410) and configured to allow multiple applications of respective adhesive films with said frame.

## Patentansprüche

1. Vorrichtung (100, 600, 700, 7000), Folgendes umfassend:
a. ein Gestell (110, 610, 710, 7010), das dafür gestaltet ist, sich entfernbar mit einem Gerät (10) in einer angebrachten Gestaltung zu koppeln, und
b. eine Klebefolie (123), die einen ersten Abschnitt aufweist, der mit dem Gestell gekoppelt ist, und einen zweiten Abschnitt, distal zum ersten Abschnitt, wobei die Klebefolie dafür gestaltet ist, an einer Zieloberfläche (11) der Vorrichtung zu haften, **dadurch gekennzeichnet, dass**
der erste Abschnitt in der angebrachten Gestaltung, wenn die Klebefolie straff ist und der zweite Abschnitt an der Zieloberfläche des Geräts anliegt, in einem Abstand zu der Oberfläche des Geräts gehalten ist und der zweite Abschnitt in einer festgelegten Weise mit der Zieloberfläche des Geräts deckungsgleich ist.

2. Vorrichtung nach Anspruch 1, weiterhin Folgendes umfassend:
eine untere Folie (124), die dafür gestaltet ist, eine Seite der Klebefolie (123), welche dafür gestaltet ist, an der Zieloberfläche (11) zu haften, abzudecken und von dieser abziehbar zu sein.

3. Vorrichtung nach Anspruch 2, wobei die untere Folie (124) eine oder mehrere Laschen (1241) umfasst, die über die Klebefolie hinausragen und dafür gestaltet sind, das Abziehen der unteren Folie von der Klebefolie zu erleichtern.

4. Vorrichtung nach Anspruch 1, weiterhin eine obere Folie (122) umfassend, die dafür gestaltet ist, eine Seite der Klebefolie (123), die gegenüber der Seite liegt, die dafür gestaltet ist, an der Zieloberfläche (11) zu haften, abzudecken und von dieser abziehbar zu sein.

5. Vorrichtung nach Anspruch 4, wobei die obere Folie (122) eine oder mehrere Laschen (1221, 1223) umfasst, die über die Klebefolie hinausragen und dafür gestaltet sind, das Herstellen der Deckungsgleichheit der Klebefolie mit der Zieloberfläche und das Abziehen der oberen Folie von der Klebefolie zu erleichtern,
optional
wobei die Klebefolie eine oder mehrere entfernbare Laschen umfasst, optional
wobei die Klebefolie nach dem Abziehen der oberen Folie von dem Gestell getrennt ist, optional
wobei die Klebefolie weiterhin eine festgelegte Bruchlinie beinhaltet, die dafür gestaltet ist, ein Abtrennen der Klebefolie von dem Gestell zu ermöglichen.

6. Vorrichtung nach Anspruch 1, wobei sich die Klebefolie über festgelegte Abschnitte der Zieloberfläche erstreckt und eine oder mehrere Öffnungen beinhaltet.

7. Vorrichtung nach Anspruch 1, wobei das Gestell dafür gestaltet ist, sich entlang eines Abschnitts eines Umfangs des Geräts zu erstrecken, optional
wobei das Gestell weiterhin dafür gestaltet ist, in der angebrachten Gestaltung eine Reibpassung mit dem Gerät herzustellen.

8. Vorrichtung nach Anspruch 1, wobei das Gestell einen oder mehrere Vorsprünge aufweist, die dafür gestaltet sind, entfernbar mit entsprechenden Vertiefungen übereinzustimmen, die durch das Gerät bereitgestellt sind, und das Gestell mit dem Gerät in Deckungsgleichheit zu bringen, optional
wobei das Gestell dafür gestaltet ist, elastisch an dem Gerät zu klemmen, optional
weiterhin einen ausziehbaren elastisch vorgespannten Arm beinhaltend, der dafür angeordnet ist, das Gerät in der angebrachten Gestaltung in das Gestell zu klemmen und sie in Deckungsgleichheit zu bringen.

9. Vorrichtung nach Anspruch 1, wobei die Zieloberfläche ein Display beinhaltet, das durch das Gerät bereitgestellt wird, optional
wobei das Gerät aus der Gruppe ausgewählt ist, die aus einem Mobiltelefon, einem Tablet, einem Laptop, einem Desktop-Computer, einer Armbanduhr, einer Kamera, einem Fernsehgerät und einem Messinstrument besteht.

10. Vorrichtung nach Anspruch 1, wobei das Gestell einen Vorsprung umfasst, der über die Zieloberfläche hinausragt und dafür gestaltet ist, den ersten Abschnitt der Klebefolie in dem Abstand von der Zieloberfläche zu halten, optional
wobei das Gestell eine oder mehrere Vertiefungen (1103) beinhaltet, die dafür gestaltet sind, einen oder mehrere Vorsprünge aufzunehmen, die von dem Gerät bereitgestellt sind.

11. Vorrichtung nach Anspruch 1, wobei die Klebefolie, wenn der zweite Abschnitt der Klebefolie in Kontakt mit der Zieloberfläche gebracht wird, sich beginnend am zweiten Abschnitt an die Oberfläche des Geräts anheftet.

12. Vorrichtung nach Anspruch 11, wobei die Klebefolie dafür gestaltet ist, vollständig an der Oberfläche des Geräts haften zu bleiben, wenn die Klebefolie von dem Gestell gelöst wird.

13. Vorrichtung nach Anspruch 12, weiterhin eine obere Folie umfassend, die an dem Gestell befestigt und dafür gestaltet ist, die Klebefolie mit dem Gestell in Deckungsgleichheit zu bringen, wobei die obere Folie entfernbar an einer Seite der Klebefolie haftet, die gegenüber der Seite liegt, die dafür gestaltet ist, an der Oberfläche des Geräts zu haften, wobei die Klebefolie dafür gestaltet ist, sich von dem Gestell zu lösen, wenn die obere Folie von der Klebefolie abgezogen wird.

14. Vorrichtung nach Anspruch 1, wobei das Gestell dafür gestaltet ist, das Gerät in der angebrachten Gestaltung in einer relativ zu einer Stützfläche geneigten Ausrichtung abzustützen, optional
wobei das Gestell weiterhin dafür gestaltet ist, das Gerät in der geneigten Ausrichtung zu halten, ohne ein Wackeln des Geräts auf der Stützfläche zu erlauben, optional
wobei sich das Gestell entlang eines Abschnitts des Geräts erstreckt und eine Basis aufweist, die in einem Winkel schräg liegt, der das Gerät auf der Stützfläche in der geneigten Ausrichtung abstützt, optional
wobei das Gestell eine Basis aufweist, die ein oder mehrere Elemente beinhaltet, die dafür gestaltet sind, die Reibung zwischen dem Gestell und einer Stützfläche zu erhöhen, um ein Rutschen der Vorrichtung abzuschwächen.

15. Vorrichtung nach Anspruch 1 bis 5, wobei die obere (122), die untere (124) und die Klebefolie (123) ein mehrschichtiges Stück (120) bilden, optional
weiterhin mehrere des mehrschichtigen Stücks (410) umfassend und dafür gestaltet, ein mehrfaches Anbringen von entsprechenden Klebefolien mit dem Gestell zu ermöglichen.

## Revendications

1. Dispositif (100 ; 600 ; 700 ; 7000) comprenant :
a. un cadre (110 ; 610 ; 710 ; 7010) configuré pour se coupler de façon amovible à un appareil (10) dans une configuration attachée ; et
b. un film adhésif (123) ayant une première partie couplée au cadre et une deuxième partie distale de la première partie, le film adhésif étant configuré pour adhérer à une surface cible (11) de l'appareil, **caractérisé en ce que**
dans la configuration attachée, quand le film adhésif est tendu et la deuxième partie jouxte la surface cible de l'appareil, la première partie est maintenue à une distance de la surface de l'appareil et la deuxième partie s'aligne d'une manière prédéterminée avec la surface cible de l'appareil.

2. Dispositif de la revendication 1 comprenant en outre :
un film inférieur (124) configuré pour recouvrir et se décoller d'un côté du film adhésif (123) configuré pour adhérer à la surface cible (11).

3. Dispositif de la revendication 2, dans lequel le film inférieur (124) comprend une ou plusieurs languettes (1241) qui dépassent du film adhésif et sont configurées pour faciliter le décollement du film inférieur du film adhésif.

4. Dispositif de la revendication 1 comprenant en outre un film supérieur (122) configuré pour recouvrir et se décoller d'un côté du film adhésif (123) à l'opposé du côté configuré pour adhérer à la surface cible (11).

5. Dispositif de la revendication 4, dans lequel le film supérieur (122) comprend une ou plusieurs languettes (1221, 1223) qui dépassent du film adhésif et sont configurées pour faciliter l'alignement du film adhésif avec la surface cible et le décollement du film supérieur du film adhésif, éventuellement dans lequel le film adhésif comprend une ou plusieurs languettes amovibles, éventuellement dans lequel le film adhésif se sépare du cadre après décollement de film supérieur, éventuellement dans lequel le film adhésif comporte en outre une ligne de rupture prédéterminée configurée pour permettre la séparation du film adhésif du cadre.

6. Dispositif de la revendication 1, dans lequel le film adhésif s'étend sur des parties prédéterminées de la surface cible et comporte une ou plusieurs ouvertures.

7. Dispositif de la revendication 1, dans lequel le cadre est configuré pour s'étendre le long d'une partie d'une circonférence de l'appareil, éventuellement dans lequel le cadre est également configuré pour établir un ajustement serré avec l'appareil dans la configuration attachée.

8. Dispositif de la revendication 1, dans lequel le cadre a une ou plusieurs saillies configurées pour s'assembler de façon amovible avec des échancrures correspondantes fournies par l'appareil et aligner le cadre avec l'appareil, éventuellement dans lequel le cadre est configuré pour serrer de façon élastique l'appareil, comportant en outre éventuellement un bras rétractable à rappel élastique agencé pour serrer et aligner l'appareil avec le cadre dans la configuration attachée.

9. Dispositif de la revendication 1, dans lequel la surface cible comporte un écran fourni par l'appareil, éventuellement dans lequel l'appareil est choisi dans le groupe constitué par un téléphone mobile, une tablette, un ordinateur portable, un ordinateur de bureau, une montre-bracelet, une caméra, un téléviseur et un instrument de mesure.

10. Dispositif de la revendication 1, dans lequel le cadre comprend une saillie dépassant de la surface cible et configurée pour maintenir la première partie du film adhésif à ladite distance de la surface cible, éventuellement dans lequel le cadre comporte une ou plusieurs échancrures (1103) configurées pour recevoir une ou plusieurs saillies fournies par l'appareil.

11. Dispositif de la revendication 1 dans lequel, quand la deuxième partie du film adhésif est mise en contact avec la surface cible, le film adhésif adhère à la surface de l'appareil commençant au niveau de la deuxième partie.

12. Dispositif de la revendication 11, dans lequel le film adhésif est configuré pour adhérer entièrement à la surface de l'appareil quand le film adhésif est retiré du cadre.

13. Dispositif de la revendication 12 comprenant en outre un film supérieur fixé au cadre et configuré pour aligner le film adhésif avec le cadre, le film supérieur adhérant de façon amovible à un côté du film adhésif qui est à l'opposé du côté qui est configuré pour adhérer à la surface de l'appareil, le film adhésif étant configuré pour se retirer du cadre quand le film supérieur est décollé du film adhésif.

14. Dispositif de la revendication 1, dans lequel le cadre est configuré pour supporter l'appareil dans la configuration attachée dans une orientation inclinée par rapport à une surface de support, éventuellement dans lequel le cadre est également configuré pour maintenir l'appareil dans l'orientation inclinée sans permettre le balancement de l'appareil sur la surface de support, éventuellement dans lequel le cadre s'étend le long d'une partie de l'appareil et a une base qui s'effile à un angle qui supporte l'appareil sur la surface de support dans l'orientation inclinée, éventuellement dans lequel le cadre a une base comportant un ou plusieurs éléments configurés pour augmenter le frottement entre le cadre et une surface de support pour atténuer le glissement du dispositif.

15. Dispositif des revendications 1 à 5, dans lequel les films supérieur (122), inférieur (124) et adhésif (123) forment un bloc multicouche (120), comprenant en outre éventuellement une multiplicité desdits blocs multicouches (410), et configuré pour permettre de multiples applications de films adhésifs respectifs avec ledit cadre.
